# EUROPEAN PATENT SPECIFICATION

(11) **EP 3 045 782 B1**
(45) Date of publication and mention of the grant of the patent: **03.04.2019**
(21) Application number: 15151396.7
(22) Date of filing: 16.01.2015
(51) Int. Cl.: F16J 15/08, F02F 1/16

(54) **Cylinder head gasket for internal combustion engines**
Zylinderkopfdichtung für Verbrennungsmotoren
Joint de culasse d'un cylindre pour moteurs à combustion interne

(43) Date of publication of application: 20.07.2016
(73) Proprietor: Caterpillar Energy Solutions GmbH, 68167 Mannheim (DE)
(72) Inventor: Guisasola, Íñigo, 76829 Landau (DE)
(74) Representative: BRP Renaud & Partner mbB Rechtsanwälte Patentanwälte Steuerberater

(56) References cited:
- EP-A1- 2 884 138
- CH-A- 289 463
- US-A- 4 518 168

## Description

### Technical Field

The present disclosure generally relates to a cylinder head gasket for internal combustion engines.

### Background

Cylinder head gaskets of internal combustion engines are well known for sealing combustion chambers against the environment at interfaces between cylinder liners and cylinder heads. Cylinder head gaskets may be clamped between the cylinder liners and cylinder heads by a plurality of cylinder head screws.

The cylinder liner rests generally upon an edge of an engine block with its top end by means of a shoulder forming an outer flange. Known cylinder head gaskets are mostly radially narrow so as to provide a high clamping pressure between the cylinder liner and the cylinder head and are in bearing engagement with the cylinder liner at a point radially offset with respect to a bearing point of the cylinder liner onto the engine block. This may cause a bending moment within the cylinder liner in view of the clamping pressure with stresses or strains that are periodically variable during engine operation.

For example, US 3,843,141 A discloses a metal cylinder head gasket for an internal combustion piston engine. The cylinder head gasket is adapted to be placed between the confronting surfaces of a cylinder barrel and a cylinder head, respectively. The cylinder head gasket comprises two adjacent respectively radially outer and inner annular portions covering substantially the whole confronting surface of the barrel with the cylinder head. The outer portion has a substantially smooth surface. The inner portion is relatively wider and more easily deformable than the outer portion by being clamped between the confronting engaging surfaces.

Further cylinder head gaskets are known from, for example, US 4,721,315 A, US 5,439,234 A, US 2011/0101626 A1, US 4,518,168, and EP 2 884 138 A1.

Furthermore, CH 289 463 A discloses a cylinder head gasket as recited in the preamble of claim 1.

The present disclosure is directed, at least in part, to improving or overcoming one or more aspects of prior systems.

### Summary of the Disclosure

According to an aspect of the present disclosure, a cylinder head gasket for providing a sealing between a cylinder liner and a cylinder head of an internal combustion engine is disclosed. The cylinder head gasket comprises a cylinder head gasket axis, a circumferential inner face extending about the cylinder head gasket axis, a circumferential outer face extending about the cylinder head gasket axis, a top face extending in radial direction between the circumferential inner face and the circumferential outer face and being configured to face the cylinder head or the cylinder liner, and a bottom face opposite the top face and being configured to sealingly contact the cylinder liner or the cylinder head. The top face includes a first protrusion including a first sealing surface circumferentially extending about the cylinder head gasket axis and being configured to sealingly contact the cylinder head or the cylinder liner. The first protrusion is disposed at a radially outer region of the cylinder head gasket. The top face further includes a second protrusion including a second sealing surface circumferentially extending about the cylinder head gasket axis and being configured to sealingly contact the cylinder head or the cylinder liner. The second protrusion is disposed at an radially inner region of the cylinder head gasket. The top face further includes a recess region provided between the first protrusion and the second protrusion. The recess region includes in radial direction a central planar portion and transitioning portions at its radially inner and outer portions for integrally transitioning into the first protrusion and the second protrusion, respectively. The first sealing surface has a first radial extension that is greater than a second radial extension of the second sealing surface.

According to a further aspect of the present disclosure, an internal combustion engine is disclosed. The internal combustion engine may comprise an engine block including a cylinder, a cylinder liner disposed within the cylinder and including a cylinder liner shoulder at least partially supported by the engine block, a cylinder head mounted onto the engine block, and a cylinder head gasket according to the present disclosure. Th cylinder head gasket may be disposed between the cylinder liner and the cylinder head.

Other features and aspects of this disclosure will be apparent from the following description and the accompanying drawings.

### Brief Description of the Drawings

Fig. 1 is a sectional view through a junction between a cylinder liner and a cylinder head with an exemplar disclosed cylinder head gasket; and
Fig. 2 is a partial perspective view of an internal combustion engine with a removed cylinder head.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that providing a cylinder head gasket with two protrusions (one radially outer main protrusion and one radially inner auxiliary protrusion) protruding towards a cylinder head may improve bearing properties of the cylinder head onto the engine block and may have improved sealing properties. Further, the cylinder head gasket according to the present disclosure includes an increased diameter such that the same overlies the bearing point of the cylinder liner onto the engine block for reducing the lever arm. Hence, the radially outer main protrusion may have a smaller radial extension, as the radially inner auxiliary protrusion may support in supporting the cylinder head.

The present disclosure may be further based at least in part on the realization that the radially inner auxiliary protrusion prevents any combustion mixture and/or combustion products to penetrate a gap formed between the cylinder head gasket and the cylinder head or between the cylinder head gasket and the cylinder liner. In particular, during operation of the internal combustion, the cylinder head may be exposed to thermal expansions and, due to the cylinder head screws provided radially outward of the cylinder head gasket and the cylinder liner, may at least partially underlie a bending moment. Such bending moment may lead to a narrow gap between the sealing surface of the cylinder head gasket and the cylinder head in which combustion mixture and/or combustion products may accumulate. Said gap being cancelled by providing the radially inner auxiliary protrusion which ensures a sealing engagement of its sealing surface with the cylinder head.

The present disclosure may be further based at least in part on the realization that a sealing surface of the radially inner auxiliary protrusion that seals against the cylinder head is smaller in size than a sealing surface of the radially outer main protrusion that also seals against the cylinder head. Specifically, the sealing surface of the radially inner auxiliary protrusion is radially smaller than the sealing surface of the radially outer main protrusion. The size of the sealing surface of the radially inner auxiliary protrusion is as high as to ensure proper sealing of the combustion chamber.

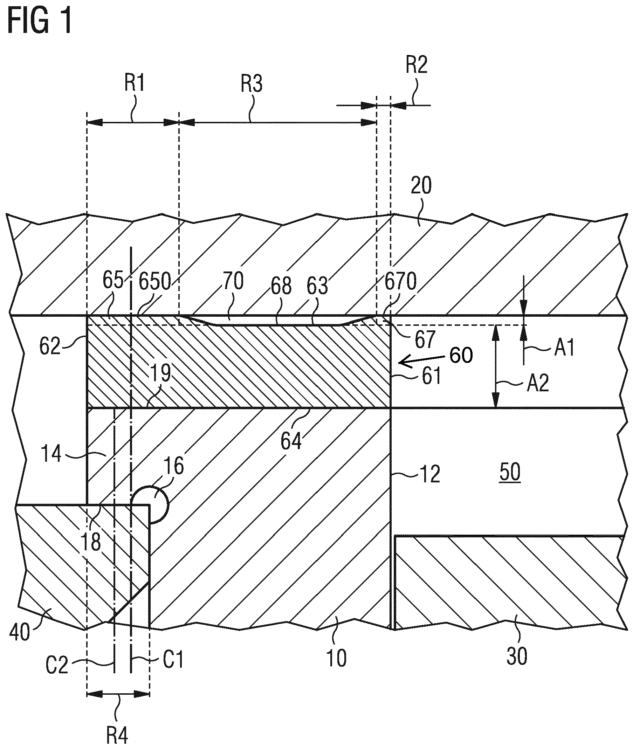

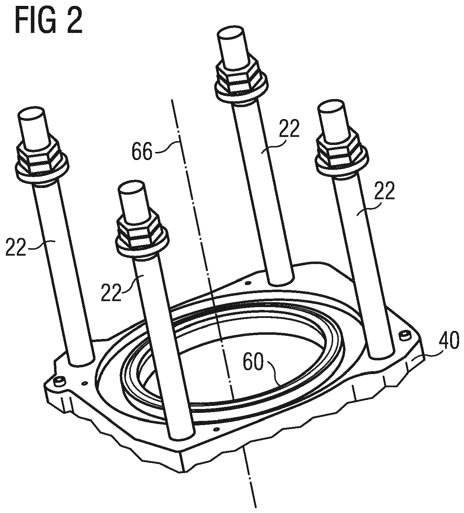

Referring now to the drawings to explain the general principle of the present disclosure by way of example. Fig. 1 is an enlarged sectional view through a junction between a cylinder liner 10 and a cylinder head 20. In Fig. 1, a piston 30 is movably arranged in the cylinder liner 10 of a gaseous fuel internal combustion engine (not shown in further detail). The cylinder liner 10 is covered by the cylinder head 20 that is mounted onto an engine block 40 via cylinder head screws 22 (see Fig. 2). The cylinder liner 10, the cylinder head 20, and the piston 30 together define a combustion chamber 50 of the internal combustion engine.

For the purposes of the present disclosure, the internal combustion engine is considered as a four-stroke internal combustion engine operating at least partly on gaseous fuel such as a gaseous fuel engine or a dual fuel engine. One skilled in the art will recognize, however, that the internal combustion engine may be any type of engine, such as, for instance, a Diesel engine, a gasoline engine, or any other known type of engine. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The cylinder liner 10 includes a circumferential inner face 12 that is configured to guide the piston 30 between a top dead center and a bottom dead center. The cylinder liner 10 further includes a shoulder 14 forming an outer flange. As shown, the shoulder 14 rests on the engine block 40 for bearing the cylinder liner 10 at the engine block 40.

The cylinder liner 10 further includes an arcuate fillet 16 ensuring a proper bearing of the cylinder liner 10 on the engine block 40. In particular, the cylinder liner 10 includes a bearing face 18 that forms a bearing of the cylinder liner 10 on the engine block 40.

A cylinder head gasket 60 is disposed between a top face 19 of the cylinder liner 10 and the cylinder head 20. The cylinder head gasket 60 includes a cylinder head gasket axis 66 (see Fig. 2), a circumferential inner face 61 extending about the cylinder head gasket axis 66 and a circumferential outer face 62 extending about the cylinder head gasket axis 66. The cylinder head gasket axis 66 being substantially parallel to a cylinder liner axis (not shown). The cylinder head gasket 60 further includes a top face 63 facing the cylinder head 20 and extending between the circumferential inner face 61 and the circumferential outer face 62, and a bottom face 64 opposite the top face 63 and sealingly contacting and resting on the top face 19 of the cylinder liner 10.

The cylinder head gasket 60 consists of an at least partially elastic material, such as, for instance, metallic material. In some further embodiments, the cylinder head gasket 60 may be made of, for example, steel, stainless steel, copper, aluminium or any alloys therof.

The top face 63 includes a first protrusion 65, a second protrusion 67, and a recess region 68. The first protrusion 65 circumferentially extends about the cylinder head gasket axis 66. The first protrusion 65 is configured to sealingly contact the cylinder head 20. The first protrusion 65 protrudes from the cylinder head gasket 60 in the vicinity of the circumferential outer face 62. Specifically, the first protrusion 65 protrudes at a radially outer region of the cylinder head gasket 60, particularly at a radially outer end region of the annular cylinder head gasket 60.

The second protrusion 67 circumferentially extends about the cylinder head gasket axis 66. The second protrusion 67 is configured to sealingly contact the cylinder head 20. The second protrusion 67 protrudes from the cylinder head gasket 60 in the vicinity of the circumferential inner face 61. Specifically, the second protrusion 67 protrudes from the cylinder head gasket 60 at a radially inner end portion of the top face 63, particularly at a radially inner end region of the annular cylinder head gasket 60.

As shown in Fig. 1, the exemplary disclosed cylinder head gasket 60 includes exactly two protrusions 65, 67 circumferentially extending about the cylinder head gasket axis 66. The radially outer first protrusion 65 is configured to ensure a proper support of the cylinder head 20 on the engine block 40 and to provide an appropriate sealing of the combustion chamber 50. The radially inner second protrusion 67 is mainly configured to provide a sealing of the gap 70, and is further configured to at least partially support the cylinder head 20 on the engine block 40.

As shown, the recess region 68 of the top face 63 radially extends between the first protrusion 65 and the second protrusion 67. The recess region 68 is a substantially planar surface and circumferentially extends about the cylinder head gasket axis 66. The recess region 68 includes in radial direction a central planar portion and transitioning portions at its radially inner and outer portions for integrally transitioning into the first protrusion 65 and the second protrusion 67, respectively. The recess region 68 is free of any further protrusions between the first protrusion 65 and the second protrusion 67 that are configured to sealingly contact the cylinder head 20. Thus, a gap 70 is provided between the cylinder head gasket 60 and the cylinder head 20.

The first protrusion 65 includes at its top end a first sealing surface 650 extending about the cylinder head gasket axis 66 and sealingly contacting the cylinder head 20. Similarly, the second protrusion 67 includes at its top end a second sealing surface 670 extending about the cylinder head gasket axis 66 and sealingly contacting the cylinder head 20.

The first protrusion 65 protrudes in elongation of the circumferential outer face 62. That is a radially outer face of the first protrusion 65 is aligned with the circumferential outer face 62.

The second protrusion 67 protrudes in elongation of the circumferential inner face 61. That is a radially inner face of the second protrusion 67 is aligned with the circumferential inner face 61.

The first sealing surface 650 and the second sealing surface 670 are annular surfaces extending about the cylinder head gasket axis 66. The first sealing surface 650 has a first radial extension R1 that is greater than a second radial extension R2 of the second sealing surface 670. Therefore, the main clamping forces provided by the cylinder head screws 22 (see Fig. 2) are transferred from the cylinder head 20 to the engine block 40 via the first sealing surface 650. Hence, the second sealing surface 670 provides an auxiliary supporting and sealing surface for transferring the clamping forces of the cylinder head screws 22 from the cylinder head 20 to the engine block 40. For example, the second radial extension R2 is about 1 % to about 20 % of the first radial extension R1.

In some embodiments, the second protrusion 67 may have a peak end prior installing between the cylinder liner 10 and the cylinder head 20. During assembly of the cylinder head 20, especially while tightening the cylinder head screws 22, the peak end of the second protrusion 67 may be at least partially plastically deformed thereby adopting a shape with the second sealing surface 670 as shown in Fig. 1. In such case, the second sealing surface 670 may have a shape corresponding to the local shape of the cylinder head 20, which may further improve the sealing function of the second protrusion 67.

The recess region 68 is a substantially annular surface extending about the cylinder head gasket axis 66. The recess region 68 includes a third radial extension R3 extending between the radially inner transitioning portion and the radially outer transtioning portion. For example, the third radial extension R3 is about 80 % to about 500 % of the first radial extension R1 of the first protrusion 65.

The first protrusion 65 and the second protrusion 67 each have a first axial extension A1. A second axial extension A2 is defined as an axial distance between the surface of the recess region 68 and the bottom face 64. The first axial extension A1 is about 1 % to about 30 % of the second axial extension A2. For example, the first axial extension A1 may be in a range from about 0.01 mm to about 0.4 mm, wherein the second axial extension A2 may be in a range from about 0.5 mm to about 4 mm.

In some embodiments, in a disassembled state, the first protrusion 65 may have the first axial extension A1, wherein the second protrusion 67 may have a third axial extension unequal to the first axial extension A1. For example, the third axial extension may be greater than the first axial extension A1. In such case, it may be ensured that the second protrusion 67 may maintain its sealing contact with the cylinder head 20 leading to improved sealing properties. Further, during assembly of the cylinder head 20, the second protrusion 67 may be plastically deformed for adopting the local shape of the cylinder head 20 and providing the second sealing surface 670.

In an assembled state of the cylinder head gasket 60, the circumferential inner face 61 is configured to be aligned with the circumferential inner face 12 of the cylinder liner 10. Further, as shown, the circumferential outer face 62 is configured to be aligned with a circumferential outer face of the cylinder liner shoulder 14. In Fig. 1, the annular bottom face 64 of the cylinder head gasket 60 substantially matches with the top face 19 of the cylinder liner 10. In some embodiment, the bottom face 64 of the cylinder head gasket 60 may be radially smaller than the top face 19 of the cylinder liner 10, such that, for example, the circumferential outer face 62 is not aligned with the circumferential outer face of the cylinder liner shoulder 14.

As indicated in dotted lines in Fig. 1, the first sealing surface 650 overlies the engine block 40. Said radial overlap is indicated in Fig. 1 with reference R4. Hence, the first sealing surface 650 radially overlies the engine block 40 when view along the cylinder head gasket axis 66. Generally, the cylinder head gasket 60 of the present disclosure is configured to comprise a first protrusion 65 having a first sealing surface 650 that at least partially overlies the engine block 40. For example, the radial overlap R4 is about 30 % to about 80 % of the first radial extension R1 of the first protrusion 65.

In some embodiments, the cylinder head gasket 60 may be disposed between the cylinder liner 10 and the cylinder head 20, such that the top face 63 faces the cylinder liner 10 and the bottom face 64 contacts the cylinder head 20 (as shown in Fig. 1, but turned about 180°). In further embodiments, the bottom face 64 may also be configured as the top face 63, namely with a radially outer main protrusion and a radially inner auxiliary protrusion.

### Industrial Applicability

In the following, the functionality of the exemplary disclosed cylinder head gasket 60 is exemplary described with reference to the drawings.

Referring to Fig. 2, the cylinder head (not shown in Fig. 2) is mounted to the engine block 40 by means of cylinder head screws 22. In the example shown in Fig. 2, four cylinder head screws 22 symmetrically disposed about the circumference of the cylinder liner 10 are used to mount the cylinder head (not shown in Fig. 2) to the engine block 40. In Fig. 2, the cylinder liner 10 is covered by the cylinder head gasket 60 and, thus, not visible in Fig. 2. As shown, each of the cylinder head screws 22 extends radially outward of the annular cylinder head gasket 60.

After tightening the cylinder head screws 22, the force of the cylinder head screws 22 is mainly transferred from the cylinder head 20 into the engine block 40 via the first protrusion 65, specifically the first sealing surface 650 embodying the main supporting surface (see Fig. 1). As the first and second sealing surfaces 650, 670 are configured to sealingly contact the cylinder head 20, the combustion chamber 50 may maintain to be sealed against the environment. Additionally, combustion mixture and/or combustion products are prevented from penetrating the gap 70.

With specific reference to Fig. 1, it can be seen that a first center line C1 of a seating surface between the first sealing surface 650 and the cylinder liner 10 is spaced apart a second center line C2 of a seating surface between the cylinder liner 10 and the engine block 40, specifically between the bearing face 18 of the shoulder 14 and the engine block 40. For instance, the offset between the first center line C1 and the second center line C2 is about 0.5 mm to about 4 mm, in particular about 2 mm. In some embodiments, the first center line C1 and the second center line C2 may be aligned to one another.

With the exemplary disclosed cylinder head gasket 60, it may be ensured that no combustion mixture and/or combustion products may enter the gap 70. Further, a bending force originating from the offset between the first and second center lines C1, C2 may be at least partially countered by a bending force originating from a combustion pressure within the combustion chamber 50. Therefore, a resulting stress exterted by the above-mentioned bending forces onto the arcuate fillet 16 of the cylinder liner 10 may be reduced, which may lead to an enhanced lifetime of the cylinder liner 10.

The person skilled in the art may recognize that the exemplary disclosed cylinder head gasket 60 may be employed at each of the cylinders of the internal combustion engine. In some further embodiments, the plurality of cylinder head gaskets 60 may be integrally formed with one another by providing appropriate intermediate portions connecting the plurality of cylinder head gaskets 60 to one another.

Although the preferred embodiments of this invention have been described herein, improvements and modifications may be incorporated without departing from the scope of the following claims.

## Claims

1. A cylinder head gasket (60) for providing a sealing between a cylinder liner (10) and a cylinder head (20) of an internal combustion engine, the cylinder head gasket (60) comprising:
a cylinder head gasket axis (66);
a circumferential inner face (61) extending about the cylinder head gasket axis (66);
a circumferential outer face (62) extending about the cylinder head gasket axis (66);
a top face (63) extending in radial direction between the circumferential inner face (61) and the circumferential outer face (32); and
a bottom face (64) opposite the top face (63) and configured to sealingly contact the cylinder liner (10) or the cylinder head (20);
the top face (63) including:
a first protrusion (65) including a first sealing surface (650) circumferentially extending about the cylinder head gasket axis (66) and configured to sealingly contact the cylinder head (20) or the cylinder liner (10), the first protrusion (65) being disposed at a radially outer region of the cylinder head gasket (60);
a second protrusion (67) including a second sealing surface (670) circumferentially extending about the cylinder head gasket axis (66) and configured to sealingly contact the cylinder head (20) or the cylinder liner (10), the second protrusion (67) being disposed at a radially inner region of the cylinder head gasket (60); and
a recess region (68) provided between the first protrusion (65) and the second protrusion (67), wherein the recess region (68) includes in radial direction a central planar portion and transitioning portions at its radially inner and outer portions for integrally transitioning into the first protrusion (65) and the second protrusion (67), respectively;
**characterized in that**
the first sealing surface (650) has a first radial extension that is greater than a second radial extension of the second sealing surface (670).

2. The cylinder head gasket (60) of claim 1, wherein the first protrusion (65) protrudes in elongation of the circumferential outer face (62).

3. The cylinder head gasket (60) of any one of the preceding claims, wherein the second protrusion (67) protrudes in elongation of the circumferential inner face (61).

4. The cylinder head gasket (60) of any one of the preceding claims, wherein the first sealing surface (650) includes a first radial extension (R1) and the second sealing surface (670) includes a second radial extension (R2), the second radial extension (R2) being about 1 % to about 20 % of the first radial extension (R1).

5. The cylinder head gasket (60) of claim 4, wherein the recess region (68) includes a third radial extension (R3) that is about 80 % to about 500 % of the first radial extension (R1).

6. The cylinder head gasket (60) of any one of the preceding claims, wherein a first axial extension (A1) of the first protrusion (65) and/or the second protrusion (67) is about 1 % to about 30 % of a second axial extension (A2) between the recess region (68) of the top face (63) and the bottom face (64).

7. The cylinder head gasket (60) of any one of the preceding claims, wherein the circumferential inner face (61) is configured to be aligned with a circumferential inner face (12) of the cylinder liner (10).

8. The cylinder head gasket (60) of any one of the preceding claims, wherein the circumferential outer face (62) is configured to be aligned with a circumferential outer face of a cylinder liner shoulder (14).

9. The cylinder head gasket (60) of any one of the preceding claims, wherein the bottom face (64) is planar.

10. The cylinder head gasket (60) of any one of the preceding claims, wherein the cylinder head gasket (60) is made of steel, stainless steel, copper, aluminium, or any alloys thereof.

11. An internal combustion engine comprising:
an engine block (40) including a cylinder;
a cylinder liner (10) disposed within the cylinder and including a cylinder liner shoulder (14) at least partially supported by the engine block (40);
a cylinder head (20) mounted onto the engine block (40); and
a cylinder head gasket (60) of any one of the preceding claims, the cylinder head gasket (60) being disposed between the cylinder liner (10) and the cylinder head (20).

12. The internal combustion engine of claim 11, wherein the first protrusion (65) of the cylinder head gasket (60) includes a first sealing surface (650) having a first radial extension (R1), such the first sealing surface (650) at least partially overlies the engine block (40) in a radial direction.

13. The internal combustion engine of claim 12, wherein about 30 % to about 80 % of the radial extension of the first protrusion (65) overlies the engine block (40).

14. The internal combustion engine of any one of claims 11 to 13, wherein the bottom face (64) of the cylinder head gasket (60) substantially matches with the top face (19) of the cylinder liner (10).

## Patentansprüche

1. Zylinderkopfdichtung (60) zum Bereitstellen einer Abdichtung zwischen einem Zylinderrohr (10) und einem Zylinderkopf (20) eines Verbrennungsmotors, die Zylinderkopfdichtung (60) umfassend:
eine Zylinderkopfdichtungsachse (66);
eine Umfangsinnenfläche (61), die sich um die Zylinderkopfdichtungsachse (66) erstreckt;
eine Umfangsaußenfläche (62), die sich um die Zylinderkopfdichtungsachse (66) erstreckt;
eine Deckfläche (63), die sich in radialer Richtung zwischen der Umfangsinnenfläche (61) und der Umfangsaußenfläche (32) erstreckt; und
eine Bodenfläche (64), die der Deckfläche (63) gegenüberliegt und konfiguriert ist, mit dem Zylinderrohr (10) oder dem Zylinderkopf (20) in dichtem Kontakt zu stehen;
die Deckfläche (63) enthaltend:
einen ersten Fortsatz (65), enthaltend eine erste Dichtfläche (650), die sich umlaufend um die Zylinderkopfdichtungsachse (66) erstreckt und konfiguriert ist, mit dem Zylinderkopf (20) oder dem Zylinderrohr (10) in dichtem Kontakt zu stehen, wobei der erste Fortsatz (65) bei einem radialen Außenbereich der Zylinderkopfdichtung (60) angeordnet ist;
einen zweiten Fortsatz (67), der eine zweite Dichtfläche (670) enthält, die sich umlaufend um die Zylinderkopfdichtungsachse (66) erstreckt und konfiguriert ist, mit dem Zylinderkopf (20) oder dem Zylinderrohr (10) in dichtem Kontakt zu setzen, wobei der zweite Fortsatz (67) bei einem radialen Innenbereich der Zylinderkopfdichtung (60) angeordnet ist; und
einen Vertiefungsbereich (68), der zwischen dem ersten Fortsatz (65) und dem zweiten Fortsatz (67) bereitgestellt ist, wobei der Vertiefungsbereich (68) in radialer Richtung einen mittleren Ebenenabschnitt und Übergangsabschnitte bei seinem radialen Innen- und Außenabschnitt für ein integriertes Übergehen in den ersten Fortsatz (65) beziehungsweise den zweiten Fortsatz (67) enthält;
**dadurch gekennzeichnet, dass**
die erste Dichtfläche (650) eine erste radiale Erweiterung hat, die größer ist als eine zweite radiale Erweiterung der zweiten Dichtfläche (670).

2. Zylinderkopfdichtung (60) nach Anspruch 1, wobei der erste Fortsatz (65) in Verlängerung der Umfangsaußenfläche (62) vorsteht.

3. Zylinderkopfdichtung (60) nach einem der vorstehenden Ansprüche, wobei der zweite Fortsatz (67) in Verlängerung der Umfangsinnenfläche (61) vorsteht.

4. Zylinderkopfdichtung (60) nach einem der vorstehenden Ansprüche, wobei die erste Dichtfläche (650) eine erste radiale Erweiterung (R1) enthält und die zweite Dichtfläche (670) eine zweite radiale Erweiterung (R2) enthält, wobei die zweite radiale Erweiterung (R2) ungefähr 1% bis ungefähr 20% der ersten radialen Erweiterung (R1) ist.

5. Zylinderkopfdichtung (60) nach Anspruch 4, wobei der Vertiefungsbereich (68) eine dritte radiale Erweiterung (R3) enthält, die ungefähr 80 % bis ungefähr 500 % der ersten radialen Erweiterung (R1) ist.

6. Zylinderkopfdichtung (60) nach einem der vorstehenden Ansprüche, wobei eine erste axiale Erweiterung (A1) des ersten Fortsatzes (65) und/oder des zweiten Fortsatzes (67) ungefähr 1 % bis ungefähr 30 % einer zweiten axialen Erweiterung (A2) zwischen dem Vertiefungsbereich (68) der Deckfläche (63) und der Bodenfläche (64) ist.

7. Zylinderkopfdichtung (60) nach einem der vorstehenden Ansprüche, wobei die Umfangsinnenfläche (61) konfiguriert ist, mit einer Umfangsinnenfläche (12) des Zylinderrohrs (10) ausgerichtet zu sein.

8. Zylinderkopfdichtung (60) nach einem der vorstehenden Ansprüche, wobei die Umfangsaußenfläche (62) konfiguriert ist, mit einer Umfangsaußenfläche einer Zylinderrohrschulter (14) ausgerichtet zu sein.

9. Zylinderkopfdichtung (60) nach einem der vorstehenden Ansprüche, wobei die Bodenfläche (64) eben ist.

10. Zylinderkopfdichtung (60) nach einem der vorstehenden Ansprüche, wobei die Zylinderkopfdichtung (60) aus Stahl, rostfreiem Stahl, Kupfer, Aluminium oder einer Legierung davon gemacht ist.

11. Verbrennungsmotor, umfassend:
einen Motorblock (40), enthaltend einen Zylinder;
ein Zylinderrohr (10), das innerhalb des Zylinders angeordnet ist und eine Zylinderrohrschulter (14) enthält, die zumindest teilweise durch den Motorblock (40) gestützt ist;
einen Zylinderkopf (20), der auf dem Motorblock (40) montiert ist; und
eine Zylinderkopfdichtung (60) nach einem der vorstehenden Ansprüche, wobei die Zylinderkopfdichtung (60) zwischen dem Zylinderrohr (10) und dem Zylinderkopf (20) angeordnet ist.

12. Verbrennungsmotor nach Anspruch 11, wobei der erste Fortsatz (65) der Zylinderkopfdichtung (60) eine erste Dichtfläche (650) mit einer ersten radialen Erweiterung (R1) enthält, damit die erste Dichtfläche (650) in einer radialen Richtung zumindest teilweise über dem Motorblock (40) liegt.

13. Verbrennungsmotor nach Anspruch 12, wobei ungefähr 30 % bis ungefähr 80 % der radialen Erweiterung des ersten Fortsatzes (65) über dem Motorblock (40) liegen.

14. Verbrennungsmotor nach einem der Ansprüche 11 bis 13, wobei die Bodenfläche (64) der Zylinderkopfdichtung (60) im Wesentlichen mit der Deckfläche (19) des Zylinderrohrs (10) übereinstimmt.

## Revendications

1. Joint de culasse de cylindre (60) pour la fourniture d'une étanchéité entre une chemise de cylindre (10) et une culasse de cylindre (20) d'un moteur à combustion interne, le joint de culasse de cylindre (60) comprenant :
un axe de joint de culasse de cylindre (66) ;
une face intérieure circonférentielle (61) s'étendant autour de l'axe de joint de culasse de cylindre (66) ;
une face extérieure circonférentielle (62) s'étendant autour de l'axe de joint de culasse de cylindre (66) ;
une face supérieure (63) s'étendant dans la direction radiale entre la face intérieure circonférentielle (61) et la face extérieure circonférentielle (32) ; et
une face inférieure (64) opposée à la face supérieure (63) et configurée pour toucher de manière étanche la chemise de cylindre (10) ou la culasse de cylindre (20) ;
la face supérieure (63) incluant :
une première saillie (65) incluant une première surface étanche (650) s'étendant sur la circonférence autour de l'axe de joint de culasse de cylindre (66) et configurée pour toucher de manière étanche la culasse de cylindre (20) ou la chemise de cylindre (10), la première saillie (65) étant disposée sur une région radialement extérieure du joint de culasse de cylindre (60) ;
une seconde saillie (67) incluant une seconde surface étanche (670) s'étendant sur la circonférence autour de l'axe de joint de culasse de cylindre (66) et configurée pour toucher de manière étanche la culasse de cylindre (20) ou la chemise de cylindre (10), la seconde saillie (67) étant disposée sur une région radialement intérieure du joint de culasse de cylindre (60) ; et
une région d'évidement (68) prévue entre la première saillie (65) et la seconde saillie (67), dans lequel la région d'évidement (68) inclut dans la direction radiale une portion planaire centrale et des portions de transition sur ses portions radialement intérieure et extérieure pour la transition d'un seul tenant en la première saillie (65) et la seconde saillie (67) respectivement ;
**caractérisé en ce que**
la première surface étanche (650) présente une première extension radiale qui est supérieure à une deuxième extension radiale de la seconde surface étanche (670).

2. Joint de culasse de cylindre (60) selon la revendication 1, dans lequel la première saillie (65) fait saillie en prolongement de la face extérieure circonférentielle (62).

3. Joint de culasse de cylindre (60) selon l'une quelconque des revendications précédentes, dans lequel la seconde saillie (67) fait saillie en prolongement de la face intérieure circonférentielle (61).

4. Joint de culasse de cylindre (60) selon l'une quelconque des revendications précédentes, dans lequel la première surface étanche (650) inclut une première extension radiale (R1) et la seconde surface étanche (670) inclut une deuxième extension radiale (R2), la deuxième extension radiale (R2) représentant environ 1% à environ 20 % de la première extension radiale (R1).

5. Joint de culasse de cylindre (60) selon la revendication 4, dans lequel la région d'évidement (68) inclut une troisième extension radiale (R3) qui représentant environ 80 % à environ 500 % de la première extension radiale (R1).

6. Joint de culasse de cylindre (60) selon l'une quelconque des revendications précédentes, dans lequel une première extension axiale (A1) de la première saillie (65) et/ou la seconde saillie (67) représente environ 1 % à environ 30 % d'une deuxième extension axiale (A2) entre la région d'évidement (68) de la face supérieure (63) et la face inférieure (64).

7. Joint de culasse de cylindre (60) selon l'une quelconque des revendications précédentes, dans lequel la face intérieure circonférentielle (61) est configurée pour être alignée sur une face intérieure circonférentielle (12) de la chemise de cylindre (10).

8. Joint de culasse de cylindre (60) selon l'une quelconque des revendications précédentes, dans lequel la face extérieure circonférentielle (62) est configurée pour être alignée sur une face extérieure circonférentielle d'un épaulement de chemise de cylindre (14).

9. Joint de culasse de cylindre (60) selon l'une quelconque des revendications précédentes, dans lequel la face inférieure (64) est planaire.

10. Joint de culasse de cylindre (60) selon l'une quelconque des revendications précédentes, dans lequel le joint de culasse de cylindre (60) est réalisé en acier, acier inoxydable, cuivre, aluminium, ou tout alliage de ceux-ci.

11. Moteur à combustion interne comprenant :
un bloc moteur (40) incluant un cylindre ;
une chemise de cylindre (10) disposée dans le cylindre et incluant un épaulement de chemise de cylindre (14) au moins partiellement supporté par le bloc moteur (40) ;
une culasse de cylindre (20) montée sur le bloc moteur (40) ; et
un joint de culasse de cylindre (60) selon l'une quelconque des revendications précédentes, le joint de culasse de cylindre (60) étant disposé entre la chemise de cylindre (10) et la culasse de cylindre (20).

12. Moteur à combustion interne selon la revendication 11, dans lequel la première saillie (65) du joint de culasse de cylindre (60) inclut une première surface étanche (650) présentant une première extension radiale (R1) de sorte que la première surface étanche (650) surmonte au moins partiellement le bloc moteur (40) dans une direction radiale.

13. Moteur à combustion interne selon la revendication 12, dans lequel environ 30 % à environ 80 % de l'extension radiale de la première saillie (65) surmonte le bloc moteur (40).

14. Moteur à combustion interne selon l'une quelconque des revendications 11 à 13, dans lequel la face inférieure (64) du joint de culasse de cylindre (60) correspond sensiblement à la face supérieure (19) de la chemise de cylindre (10).
